# DEMANDE DE BREVET EUROPEEN

(11) **EP 1 355 441 A1**
(43) Date de publication de la demande: **22.10.2003**
(21) Numéro de dépôt: 03290791.7
(22) Date de dépôt: 28.03.2003
(51) Int. Cl.: H04J 14/08, H04J 14/02

(54) **Procédé et système de contrôle de la transmission de signaux optiques**

(30) Priorité: 18.04.2002 FR 0204866
(71) Demandeur: ALCATEL, 75008 Paris (FR)
(72) Inventeur: Bisson, Arnaud, Faller, 91400 Orsay (FR); Faure, Jean-Paul, 75014 Paris (FR); Noirie, Ludovic, 91620 Nozay (FR)
(74) Mandataire: Fournier, Michel Robert Marie

(57) **Abrégé**

La présente invention concerne un procédé de contrôle de la transmission de signaux optiques comportant une étape d'insertion d'un signal (S) de contrôle plus particulièrement adapté au contrôle de la qualité de service. Lors de la transmission de signaux optiques portés chacun par une longueur d'onde prédéfinie définissant un canal de transmission (Ci), ces signaux sont regroupés sur une même fibre en une bande (B) de canaux. Le procédé comporte alors une étape de modulation simultanée desdits signaux regroupés dans la bande de canaux à partir du signal de contrôle à transmettre de sorte que chacun des signaux constitue une porteuse du signal de contrôle.

## Description

La présente invention concerne un procédé et un système de contrôle de la transmission de signaux optiques plus particulièrement adaptés au contrôle de la qualité de service.

Dans les années récentes une énorme demande de bande passante a été suscitée par le déploiement des formes modernes de télécommunications en particulier l'Internet et son application principale, le WEB (World Wide Web), mais aussi de tous les réseaux privés d'entreprises et organismes divers, sans omettre les communications sans fil, en particulier le téléphone portable qui demande en pratique des infrastructures terrestres performantes pour ne pas décevoir l'attente des clients. Pour y faire face, les responsables de la mise en oeuvre des réseaux nécessaires au déploiement de ces nouvelles formes de communication ont rapidement dû avoir recours au transport des signaux porteurs de l'information sous forme optique pour bénéficier d'une part du faible coût des fibres elles-mêmes et d'autre part des très hauts débits qu'on peut atteindre malgré des distances de transmission qui peuvent se mesurer en kilomètres voire en dizaines et même en centaines de kilomètres, sans avoir besoin de régénérer le signal. L'atténuation étant en effet très faible, en particulier dans les fibres mono modes, comparée à ce qui peut être obtenu avec une transmission électrique sur cuivre par exemple. Par ailleurs, une transmission optique évite tous les problèmes liés aux perturbations électromagnétiques qui nécessitent de coûteux circuits de protection et peuvent entraîner de fréquentes erreurs de transmission.

La technique du multiplexage en longueur d'onde, dite « WDM » (de l'anglais « Wavelength Division Multiplexing ») a permis de transmettre dans une même fibre une pluralité de signaux portés respectivement par des longueurs d'ondes différentes, appartenant en général à une fenêtre de spectrale située autour de 1550 nm. On multiplie ainsi le nombre de canaux de transmission indépendants associés respectivement à ces longueurs d'ondes porteuses. En d'autres termes, en transmettant des ondes lumineuses de couleurs différentes, la partie exploitée de la bande passante d'une simple fibre est mieux utilisée. La technique dite « DWDM » (de l'anglais « Dense WDM »), qui a vite succédé au WDM, permet ainsi de multiplexer des centaines de canaux, voire plus.

La multiplication des services à forte valeur ajoutée a entraîné un besoin de contrôle de la qualité du service offert, habituellement désigné par « QoS » (de l'anglais « Quality Of Service »).

Pour effectuer ce contrôle, on a besoin de créer et véhiculer dans le réseau des données de contrôle correspondantes, de sorte que l'on puisse les détecter par la suite et les analyser.

Une première solution consiste à créer des données de contrôle canal par canal en sur-modulant séparément le signal de chaque canal à l'aide des données de contrôle à inscrire.

Une seconde solution consiste à utiliser un canal dédié à la transmission des données de contrôle.

Toutefois, et notamment lors de l'utilisation de la technique DWDM, les informations à transmettre sur un réseau de transmission optique sont organisées par bandes de longueur de d'onde, c'est-à-dire par bandes de canaux, les échanges entre les différents noeuds d'un réseau de transmission optique s'effectuant par bandes entières de canaux. Ainsi, le besoin de contrôle de la QoS se manifeste bande par bande. Les deux solutions décrites ci dessus posent alors certaines difficultés.

La première solution implique en effet une sur-modulation pour chaque canal associé à une même bande et la détection du signal de contrôle impose un démultiplexage pour extraire la sur-modulation d'un des canaux.

La seconde solution implique d'utiliser un canal dédié pour chaque bande à contrôler et entraîne également un coût très élevé.

La présente invention vise à fournir un procédé de contrôle permettant, de manière simple et économique, de superviser un réseau de transmission optique en contrôlant la QoS bande par bande.

La présente invention propose à cet effet un procédé de contrôle de la transmission de signaux optiques portés chacun par une longueur d'onde prédéfinie définissant un canal de transmission, ce procédé comportant une étape d'insertion d'un signal de contrôle lors de la transmission desdits signaux optiques, lesdits signaux étant regroupés sur une même fibre pour former un multiplexe définissant une bande de canaux, caractérisé en ce que ledit procédé comporte une étape de modulation consistant à moduler simultanément lesdits signaux du multiplex de ladite bande de canaux en fonction dudit signal de contrôle à transmettre, de sorte que chacun desdits signaux constitue une porteuse dudit signal de contrôle.

Grâce à l'invention, une unique modulation est nécessaire pour insérer les données de contrôle, lesquelles sont portées par chacun des signaux ; de plus, l'invention est adaptée au contrôle de la QoS bande par bande puisque les données de contrôle sont directement inscrites sur la bande via la modulation. Cette modulation fonction du signal de contrôle représentant les informations binaires à transmettre pour contrôler la QoS est typiquement une modulation en fréquence ou en phase d'une sous-porteuse de fréquence basse par rapport aux fréquences de modulation des signaux du multiplexe.

Il convient de noter que cette modulation simultanée s'appliquant sur plusieurs ondes porteuses de longueurs d'onde différentes pourraient poser problème après transmission dans des liaisons ou des milieux présentant une dispersion chromatique. En réalité, ce problème ne se pose pas vraiment dans la mesure où la plupart des systèmes de transmission utilisant des liaisons dispersives sont généralement équipés de compensateurs dispersion chromatique. De plus, même en l'absence de compensations, la fréquence de la sous-porteuse peut toujours être choisie suffisamment basse pour éviter ce problème compte tenu du fait que les informations de contrôle ne nécessitent pas un débit important.

Avantageusement, le procédé comporte une étape de détection dudit signal de contrôle.

De manière avantageuse, ladite étape de détection est réalisée en détectant ledit signal de contrôle à partir du multiplex modulé. En effet, il peut s'avérer utile de récupérer le signal de contrôle à un moment où les canaux sont encore en bande. De plus, il n'est pas nécessaire de prévoir une synchronisation dans la mesure où tous les canaux ont été sur-modulés en même temps.

Selon une variante, le procédé comporte une étape de démultiplexage au moyen d'un démultiplexeur qui reçoit en entrée le multiplex modulé pour fournir sur chacune de ses sorties un signal optique portant ledit signal de contrôle et correspondant à un canal de transmission.

Avantageusement, ladite étape de détection s'effectue sur au moins une des sorties dudit démultiplexeur.

Il est ainsi également possible de récupérer le signal de contrôle après la séparation de la bande en différents canaux et ce, sur un seul des canaux puisque chacun des canaux porte le même signal de contrôle.

Selon un mode de réalisation, le procédé comporte une étape d'annulation dudit signal de contrôle par suppression de ladite modulation. Cette étape est utile pour pouvoir modifier le signal de contrôle.

La présente invention a également pour objet un procédé d'insertion/extraction d'une bande de canaux dans un noeud de permettant la transmission d'une pluralité de bandes de canaux, au moyen d'au moins un commutateur d'insertion/extraction comportant une première entrée reliée audit noeud de réseau, une deuxième entrée pour insérer une bande de canaux dans ledit noeud de réseau, une première sortie relié au noeud de réseau et une deuxième sortie pour extraire une bande dudit noeud de réseau, ledit procédé comportant les étapes suivantes :
- réception d'une bande de canaux sur ladite première entrée dudit commutateur,
- lorsqu'une bande de canaux à insérer est reçue sur ladite deuxième entrée, transmission de ladite bande de canaux de ladite première entrée vers ladite deuxième sortie et de ladite bande de canaux à insérer de ladite deuxième entrée vers ladite première sortie, puis insertion d'un signal de contrôle sur ladite bande de canaux transmise sur ladite première sortie au moyen du procédé d'insertion d'un signal de contrôle selon l'invention.

Ainsi, le procédé selon l'invention est particulièrement adapté pour être utilisé dans une architecture de noeud de réseau avec multiplexage à insertion et extraction de bandes de canaux.

Selon un mode de réalisation, la bande de canaux reçue sur ladite première entrée dudit commutateur porte un signal de contrôle inséré au moyen du procédé d'insertion d'un signal de contrôle selon l'invention.

Enfin, la présente invention propose un système pour la mise en oeuvre du procédé d'insertion d'un signal de contrôle selon l'invention, caractérisé en ce qu'il comporte des moyens pour moduler simultanément lesdits signaux du multiplex de ladite bande de canaux en fonction dudit signal de contrôle à transmettre, de sorte que chacun desdits signaux constituent une porteuse dudit signal de contrôle.

Selon un mode de réalisation, les moyens pour moduler sont un atténuateur optique variable.

Avantageusement, le système comporte un multiplexeur pour regrouper sur une même fibre en une bande de canaux des signaux optiques portés chacun par une longueur d'onde prédéfinie définissant un canal de transmission.

De manière avantageuse, le système comporte des moyens de détection dudit signal de contrôle.

Selon un mode de réalisation, les moyens de détection du signal sont une photodiode.

D'autres caractéristiques et avantages de la présente invention apparaîtront dans la description suivante d'un mode de réalisation de l'invention donné à titre illustratif et nullement limitatif.

Dans les figures suivantes :
- La figure 1 représente un système pour la mise en oeuvre du procédé d'insertion d'un signal de contrôle selon l'invention,
- La figure 2 représente un élément d'insertion/extraction de bandes de canaux, cet élément faisant partie d'un noeud de réseau et utilisant un procédé selon l'invention.

Dans toutes les figures, les éléments communs portent les mêmes signes de référence.

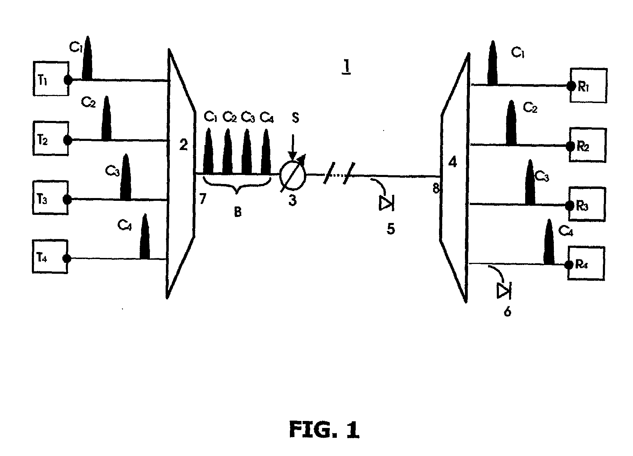

La figure 1 représente un exemple de système 1 pour la mise en oeuvre du procédé d'insertion d'un signal de contrôle selon l'invention.

Ce système 1 comporte schématiquement en émission un multiplexeur 2, un atténuateur optique variable 3, et en réception des photodiodes 5 et 6 et un démultiplexeur 4.

Selon l'exemple représenté, le multiplexeur 2 comporte quatre ports d'entrée (Tᵢ)_{1≤i≤4} et un port de sortie 7 et le démultiplexeur 4 comporte un port d'entrée 8 et quatre ports de sortie (Rᵢ)_{1≤i≤4}.

Le multiplexeur 2 reçoit sur ses ports d'entrée (Tᵢ)_{1≤i≤4} respectivement plusieurs signaux optiques d'entrée. Chaque signal d'entrée est sous la forme d'une modulation d'une onde porteuse ayant une longueur d'onde prédéfinie définissant un canal de transmission (Cᵢ)_{1≤1≤4}. Cette modulation est souvent une modulation en amplitude, mais elle peut être aussi une modulation de phase optique ou une modulation de fréquence optique. La modulation est synchronisée par un rythme d'horloge définissant une fréquence bit.

Le multiplexeur 2 fournit sur sa sortie 8 un signal multiplex définissant une bande B de canaux comportant les quatre canaux (Cᵢ)_{1≤i≤4}.

Ce multiplex est alors modulé en fonction du signal de contrôle représentant les informations binaires à transmettre pour contrôler la QoS.

Cette modulation est typiquement une modulation en fréquence ou en phase d'une sous-porteuse de fréquence basse par rapport aux fréquences bit des signaux de multiplex. Cette modulation est en outre de faible amplitude par rapport à des signaux optiques d'entrée, par exemple inférieure à 10 % à cette dernière.

Cette modulation en amplitude est réalisée par un signal S de contrôle de qualité de service qui commande un atténuateur variable 3. Ainsi, chacun des signaux des canaux (Cᵢ)_{1≤i≤4} sert de porteuse au signal S.

La sous-porteuse du signal S peut avoir une fréquence comprise par exemple entre 10 kHz à 1 MHz, en tous cas beaucoup plus faible que la fréquence de modulation des signaux d'entrée, qui est typiquement aujourd'hui de l'ordre de 1 GHz à 10 GHz.

Le signal multiplexé et modulé par S peut ensuite être transmis par le réseau optique (schématisé par des pointillés). Au niveau de la réception, on dispose d'un démultiplexeur 4 dont l'entrée 8 reçoit le signal multiplexé transmis. Sur chacune des sorties (Rᵢ)_{1≤i≤4} du démultiplexeur 4 on retrouve respectivement les quatre canaux (Cᵢ)_{1≤i≤4} porteurs chacun du signal de contrôle S.

La détection du signal S peut se faire avant ou après l'étape de démultiplexage. Ainsi, la photodiode 5 située en amont du démultiplexeur 4 permet la détection de S avant la démultiplexage et la photodiode 6 située sur la sortie R4 du démultiplexeur 4 permet la détection de S après le démultiplexage. Il apparaît ici que la détection peut être réalisée aussi bien à partir du signal de la bande B qu'à partir d'un des canaux (Cᵢ)_{1≤i≤4,} puisque chacun des canaux porte exactement le même signal S.

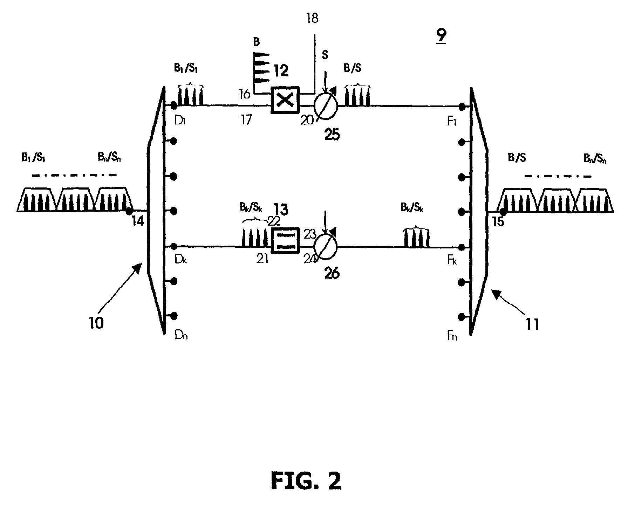

La figure 2 représente un exemple d'élément 9 d'insertion/extraction de bandes de canaux faisant partie d'un noeud de réseau non représenté en entier et utilisant un procédé selon l'invention.

L'élément 9 représenté comprend un démultiplexeur 10, un multiplexeur 11, des commutateurs spatiaux d'insertion/extraction, par exemple 12 et 13 et des modulateurs, par exemple 25 et 26.

Le multiplexeur 10 a une entrée 14 et n sorties (Dᵢ)_{1≤i≤n} et le démultiplexeur 11 a n entrées (Fᵢ)_{1≤i≤n} et une sortie 15.

Le commutateur 12 a deux entrées 16 et 17 et deux sorties 18 et 20.

De même, le commutateur 13 a deux entrées 21 et 22 et deux sorties 23 et 24.

L'élément 9 reçoit sur l'entrée 14 du démultiplexeur 10 un signal constitué de plusieurs bandes (Bᵢ)_{1≤i≤n} comportant chacune par exemple quatre canaux. Chacune de ces bandes porte un signal (Sᵢ)_{1≤i≤n} de contrôle de qualité de service. Ces signaux (Sᵢ)_{1≤i≤n} ont par exemple été insérés sur les bandes (Bᵢ)_{1≤i≤n} via un procédé tel que décrit en référence à la figure 1.

Le démultiplexeur 10 va démultiplexer le signal reçu sur chacune de ses sorties (Dᵢ)_{1≤i≤n}. Ces sorties (Dᵢ)_{1≤i≤n} fournissent chacune un signal en bande de canaux (Bᵢ)_{1≤i≤n} portant un signal (Sᵢ)_{1≤i≤n}. A titre illustratif, nous nous intéresserons plus particulièrement dans ce qui suit à la sortie D₁ fournissant le signal B₁ modulé par S₁ et à la Dₖ fournissant le signal Bₖ modulé par Sₖ.

Le signal B₁ modulé par le signal S₁ est injecté sur l'entrée 17 du commutateur 12. On a supposé qu'un signal de bande B destiné à être inséré dans le noeud de réseau est appliqué sur l'entrée 16 du commutateur 17. Le commutateur 12 est alors en mode de propagation croisée ; le signal de bande B est donc transmis sur la sortie 20 du commutateur 12 et donc inséré dans le noeud alors que le signal en bande B₁ modulé par le signal S₁ est transmis sur la sortie 18 et donc extrait du noeud.

Le signal de bande B est alors modulé par le signal de contrôle S via le modulateur 25. Le signal de bande B modulé par S est ensuite transmis sur l'entrée F₁ du multiplexeur 11.

Le signal Bₖ modulé par le signal Sₖ est injecté sur l'entrée 21 du commutateur 13. On a supposé par contre qu'aucun signal à insérer dans le noeud n'est présent sur l'entrée 22 du commutateur 13 qui est alors en mode de propagation parallèle. Le signal Bₖ modulé par le signal Sₖ est donc transmis sur la sortie 24 du commutateur 13 et la sortie 23 ne reçoit rien.

Deux cas sont alors envisageables :
- Soit le signal Bₖ modulé par le signal Sₖ est transmis directement sur l'entrée Fₖ du multiplexeur 11 via le modulateur 26 qui est inactif. C'est cette configuration qui est représentée sur la figure 2.
- Soit le modulateur 26 annule la modulation du signal de bande Bₖ par le signal Sₖ et introduit une nouvelle modulation du signal de bande Bₖ, ledit signal nouvellement modulé et portant un nouveau signal de contrôle étant ensuite transmis sur l'entrée Fₖ du multiplexeur 11. L'étape d'annulation de la modulation comporte une étape de lecture de la modulation existante et une étape qui éllabore une modulation complémentaire de celle-ci, puis superpose à la modulation existante la modulation complémentaire en plus de la nouvelle modulation du signal de bande.

Remarquons que le signal Sₖ peut également être extrait en étant transmis sur la sortie 23.

Bien entendu, l'invention n'est pas limitée au mode de réalisation qui vient d'être décrit et on pourra remplacer tout moyen par un moyen équivalent sans sortir du cadre de l'invention.

## Revendications

1. Procédé de contrôle de la transmission de signaux optiques portés chacun par une longueur d'onde prédéfinie définissant un canal de transmission (Cᵢ), ce procédé comportant une étape d'insertion d'un signal (S) de contrôle lors de la transmission desdits signaux optiques, lesdits signaux étant regroupés sur une même fibre pour former un multiplex définissant une bande (B) de canaux (Cᵢ), **caractérisé en ce que** ledit procédé comporte une étape de modulation consistant à moduler simultanément lesdits signaux du multiplex de ladite bande (B) de canaux (Ci) en fonction dudit signal (S) de contrôle à transmettre, de sorte que chacun desdits signaux constitue une porteuse dudit signal (S) de contrôle.

2. Procédé selon la revendication 1, **caractérisé en ce qu'**il comporte une étape de détection dudit signal (S) de contrôle.

3. Procédé selon la revendication 2, **caractérisé en ce que** ladite étape de détection est réalisée en détectant ledit signal (S) de contrôle à partir dudit multiplex modulé.

4. Procédé selon la revendication 3, comportant une étape de démultiplexage au moyen d'un démultiplexeur (4) qui reçoit en entrée le multiplex modulé pour fournir sur chacune de ses sorties un signal optique portant ledit signal (S) de contrôle et correspondant à un canal de transmission.

5. Procédé selon la revendication 4, comportant une étape de détection dudit signal de contrôle, ladite étape de détection s'effectuant sur au moins une des sorties dudit démultiplexeur (4).

6. Procédé selon l'une des revendications 1 à 5, **caractérisé en ce que** ledit procédé comporte une étape d'annulation dudit signal (S) de contrôle par suppression de ladite modulation.

7. Procédé d'insertion/extraction d'une bande (B) de canaux dans un noeud de réseau permettant la transmission d'une pluralité de bandes (Bᵢ) de canaux, au moyen d'au moins un commutateur (12) d'insertion/extraction comportant une première entrée (17) reliée audit noeud de réseau, une deuxième entrée (16) pour insérer une bande (B) de canaux dans ledit noeud de réseau, une première sortie (20) relié au noeud de réseau et une deuxième sortie (18) pour extraire une bande dudit noeud de réseau, ledit procédé comportant les étapes suivantes :
- réception d'une bande (B₁/S₁) de canaux sur ladite première entrée (17) dudit commutateur (12),
- lorsqu'une bande (B) de canaux à insérer est reçue sur ladite deuxième entrée (16), transmission de ladite bande (B₁/S₁) de canaux de ladite première entrée (17) vers ladite deuxième sortie (18) et de ladite bande (B) de canaux à insérer de ladite deuxième entrée (16) vers ladite première sortie (20), puis insertion d'un signal (S) de contrôle sur ladite bande (B) de canaux transmise sur ladite première sortie (20) au moyen du procédé selon l'une des revendications 1 à 5.

8. Procédé d'insertion/extraction selon la revendication 7, **caractérisé en ce que** la bande de canaux (B₁/S₁) reçue sur ladite première entrée (17) dudit commutateur (12) portant un signal (S₁) de contrôle inséré par modulation, ledit procédé comporte une étape d'annulation dudit signal (S) de contrôle par suppression de ladite modulation.

9. Système (1) pour la mise en oeuvre du procédé selon l'une des revendications 1 à 8, **caractérisé en ce qu'**il comporte des moyens (3) pour moduler simultanément lesdits signaux du multiplex de ladite bande (B) de canaux (Cᵢ) en fonction dudit signal (S) de contrôle à transmettre, de sorte que chacun desdits signaux constituent une porteuse dudit signal (S) de contrôle.

10. Système selon la revendication 9, **caractérisé en ce que** lesdits moyens (3) pour moduler sont un atténuateur optique variable (3).
